# EUROPEAN PATENT SPECIFICATION

(11) **EP 2 996 813 B1**
(45) Date of publication and mention of the grant of the patent: **09.04.2025**
(21) Application number: 14791248.9
(22) Date of filing: 02.05.2014
(51) Int. Cl.: B05B 3/00, A01G 25/09

(54) **VARIABLE-SPEED IRRIGATION SYSTEM HAVING AN EXTENSION ARM**
BEWÄSSERUNGSSYSTEM MIT VERÄNDERLICHER GESCHWINDIGKEIT UND VERLÄNGERUNGSARM
SYSTÈME D'IRRIGATION À VITESSE VARIABLE AYANT UN BRAS D'EXTENSION

(30) Priority: 02.05.2013 US 201361818581 P
(43) Date of publication of application: 23.03.2016
(73) Proprietor: Valmont Industries, Inc., Omaha, NE 68154 (US)
(72) Inventor: MALSAM, Craig S., Omaha, Nebraska 68130 (US)
(74) Representative: Pure Ideas Limited
(86) International application number: PCT/US2014/036523
(87) International publication number: WO 2014/179663

(56) References cited:
- US-A1- 2013 018 553
- US-A1- 2013 018 553
- US-A1- 2013 048 747
- US-A1- 2013 087 631
- US-A1- 2013 090 766
- US-B2- 6 755 362
- US-B2- 6 928 339

## Description

### BACKGROUND

Modem day agriculture has become increasingly efficient in the past century and this trend must continue in order to produce a sufficient food supply for the increasing world population. A notable advancement in agricultural production was the introduction of mechanized irrigation systems, such as the center pivot and the linear move irrigation systems. vulnerability to extreme weather conditions. The ability to monitor and to control the amount of water and/or nutrients (applicants) applied to an agricultural field has increased the amount of farmable acres in the world and increases the likelihood of a profitable crop yield. These irrigation systems typically include a control device configured to furnish a user interface allowing the operator to monitor and control one or more functions or operations of the irrigation system. Examples of prior systems are provided by US2013/087631 (PFRENGER Jochen) and US2013/018553 (Malsam Craig) where speed variations allow steering but with added complexity and stress upon the irrigation system.

### SUMMARY

An irrigation system is disclosed in claim 1 below.
Other features of aspects of the present invention are outlined in the claims dependent upon claim 1.

This Summary is provided solely to introduce subject matter that is fully described in the Detailed Description and Drawings. Accordingly, the Summary should not be considered to describe essential features nor be used to determine scope of the claims.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items.
FIG. IA is an isometric diagrammatic perspective view of an irrigation system m accordance with an example implementation of the present disclosure.
FIG. IB is a diagrammatic plan view of an irrigation system in accordance with an example implementation of the present disclosure.
FIG. IC is a block diagram illustrating a control device of the irrigation system shown in
   FIGS. IA and IB in accordance with an example implementation of the present disclosure.
FIG. ID is a block diagram illustrating a sensor in electronic communication with a variable-drive control unit, wherein the variable control device is configured to control the selected speed of a variable-drive unit based upon an alignment of corresponding adjacent spans as determined by the sensor.
FIG. 2 is a block diagram illustrating an example implementation of a variable-drive control unit that is configured to control a variable-drive unit, wherein the variable-drive control unit includes a processor, a memory, and a communication module configured to communicate with a sensor and the variable-drive unit.
FIG. 3 is a partial look-up table that may be utilized by the control device shown in FIG. IC.
FIG. 4 is a flow diagram illustrating an example method for steering an extension arm in accordance with an example implementation of the present disclosure.
FIG. 5 is a flow diagram illustrating an example method for determining a mis-alignment of one or more irrigation spans of the irrigation system in accordance with an example implementation of the present disclosure.

### DETAILED DESCRIPTION

Most irrigation systems, such as center pivot irrigation systems, include drive units (motors) located on the drive towers to propel the irrigation system. Many of these rely on fixed rate motors due to their relative simplicity and robustness. However, such systems can only adjust the relative alignment of various span portions by alternatively starting and stopping the drives. This results in drive towers coming to a complete stop and then requiring a large impulse of power to start the tower again. The starting and stopping places undue stress on various components of the irrigation system, which can accelerate wear and increase maintenance costs. The irregular motion can also cause uneven application of irrigation water and/or chemicals to the field. This results in waste of both water and chemicals. The irregular motion can also cause errors in alignment or in determining the position of the end of the machine. This can result in errors in operations based on position.

Accordingly, an irrigation system is disclosed that is configured to maintain a near straight (e.g., an at least zero degree (0°)) alignment. In an implementation, an irrigation system includes multiple interconnected spans which are supported by multiple tower structures. Each tower structure includes a variable-speed drive unit for selectively driving a tower structure at a selected speed. The irrigation system also includes multiple sensors that are each associated with a corresponding span to determine an alignment of the corresponding span with respect to adjacent spans. Each of the sensors is in communication with a corresponding variable-drive control unit. Each of the variable-drive control units are configured to control the selected speed of a corresponding variable-speed drive unit to maintain the interconnected spans in a substantially linear orientation with respect to adjacent ones of the plurality of interconnected spans along a generally longitudinally oriented axis (e.g., maintain alignment of the spans with respect to each other)

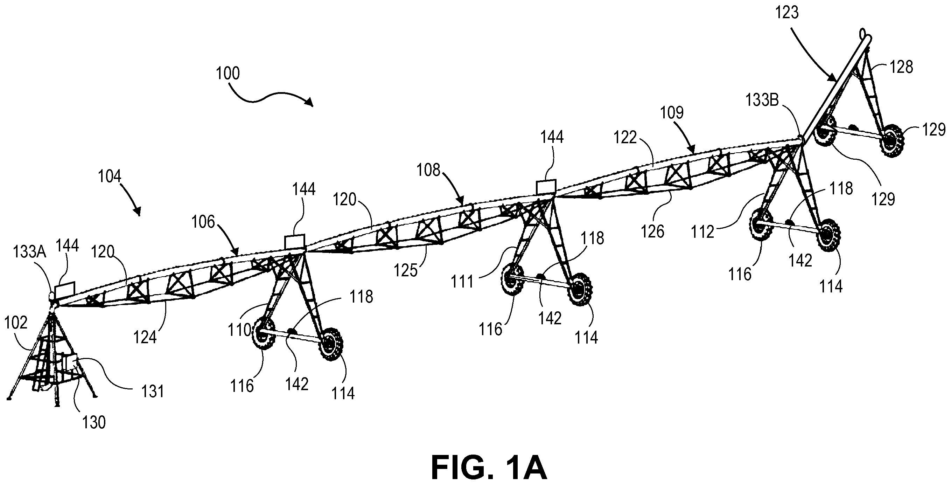

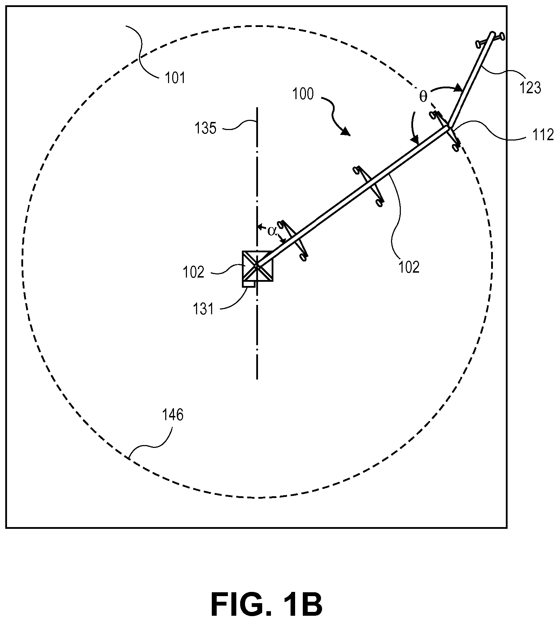

FIG. 1A illustrates a self-propelled (e.g., mechanized) irrigation system (assembly) 100 in accordance with example implementations of the present disclosure. Examples of self- propelled irrigation systems include a center pivot irrigation system, a linear move irrigation system, or the like. FIG. 1A illustrates an embodiment of the present disclosure where the irrigation system 100 is a center pivot irrigation system. However, it is contemplated that the present disclosure may be implemented in other self-propelled irrigation systems (e.g., linear move irrigation systems). As shown, the system 100 includes a center pivot structure 102, a main section assembly 104 (irrigation section assembly, main boom assembly) coupled (e.g., connected) to the center pivot structure 102. The center pivot structure 102 has access to a well, a water repository (e.g., water tank), or other fluid source, to furnish water to the irrigation system 100. For instance, the well may be located under the center pivot structure 102. In another instance, the well may be in close proximity to the cultivation area 101 (e.g., field). The fluid source may be coupled to a repository or other source of agricultural products to inject fertilizers, pesticides, and/or other chemicals into the fluids to create an applicant for application during irrigation. Thus, the applicant may be water, fertilizer, herbicide, pesticide, combinations thereof, or the like. The irrigation system 100 may be coupled to a fluid displacement device (e.g., a pump assembly) configured to furnish applicant throughout the irrigation system 100. For example, the fluid displacement device may assist in displacing fluid from the fluid source (e.g., well, water repository, etc.) to the conduit portions of the irrigation system which are described herein. The center pivot structure 102 can be fixed or can be towable such that an operator can move the irrigation system 100 from one field to another. In an implementation, the center pivot structure 102 may comprise a frame assembly (e.g., galvanized steel frame assembly, and so forth).

The main section assembly 104 includes a number of interconnected spans 106, 108, 109 (e.g., irrigation spans) supported by one or more tower structures 110, 111 (intermediate tower structures) and an end tower structure 112. The tower structures 110, 111, 112 may be any tower configuration known in the art to adequately support the conduits (e.g., water pipe sections) described herein. It is understood that the section assembly 104 may include any number of spans and tower structures.

The tower structures 110, 111 and the end tower structure 112 each include wheels 114, 116, to assist in traversing the irrigation system 100 (e.g., allowing the main section assembly 104 to pivot) about a cultivation area (e.g., field). In an implementation, the wheels 114, 116 may be driven by a suitable variable-drive unit 118 (e.g., drive motor), or the like, to assist in traversing the system 100 about the specified area. For example, each tower structure 110 may include a drive unit 118 to propel the respective tower structure 110, 111, 112 (and the irrigation system 100) through the cultivation area. In one or more implementations, the drive units 118 comprise variable-speed motors that are configured to selectively drive a tower structure at a selected speed. For example, the drive units 118 may comprise electric switched reluctance motors configured to drive the irrigation system 100 in a forward direction or a reverse direction. Typically, the alignment between each span 106, 108, 109 (e.g., machine alignment) of the irrigation system 100 is maintained by a suitable mechanical linkage at each drive unit span joint. The drive unit span joint is configured as a potentiometer, or other sensor, that serves to accelerate or decelerate the respective drive unit 118 (switched reluctance motors, which are described in greater detail below) to at least substantially keep the respective span 106, 108, 109 in alignment with the other irrigation spans. Alignment may be defined as each span 106, 108, 109 being aligned with one or more adjacent spans along a generally linear longitudinal axis (e.g., defined with respect to a generally horizontal surface, such as the ground).

As shown in FIG. 1A, each span 106, 108 includes conduits 120, 121, 122 (e.g., pipes) that are configured to carry (e.g., transport, provide, and so forth) liquid (e.g., applicant) along the length of the system 100 to one or more applicant dispersal assemblies that are configured to irrigate the cultivation area. Each conduit 120, 121, 122 may be coupled to one another to allow fluid communication between each conduit. In an implementation, the conduits 120, 121, 122 may be supported by truss-type framework structures 124, 125, 126. Thus, the main fluid displacement device may be configured to displace applicant through the conduits 120, 121, 122. As shown in FIG. 1A, the irrigation system 100 also includes an extension arm 123 that is pivotally connected to the end tower 112. According to the invention, the extension arm 123 is supported by a swing tower 128 having steerable wheels 129 driven by a motor. The extension arm 123 is folded in relative to the end tower 112 when the arm 123 is not irrigating a comer of a field and may be pivoted outwardly away from the end tower 112 while irrigating the comers of a field. The extension arm 123 is coupled to the end tower 112 by an articulating pivot joint to allow the extension arm 123 to articulate or bend relative the end tower 112 or to the end of the extension arm 123.

As shown in FIGS. IA and IC, the irrigation system 100 includes a control device 130, which is accessible via the control panel 131, that is in electronic communication with one or more components of the system 100. For example, the control device 130 may be in electronic communication with one or more tower boxes mounted at one or more tower structures 110, 111, 112 and position-determining devices 133A, 133B utilized to determine the position of the irrigation system and a position of the extension arm 123, respectively. In an implementation, the position-determining devices 133A, 133B may be an angle sensor, or the like, mounted to the center pivot structure 102 and the end tower 112, respectively. The angle sensor 133A may be positioned between the center pivot structure 102 and the main section assembly 104 for determining the rotational position of the main section assembly 104 with respect to an axis line 135. Additionally, the control device 130 is configured to utilize the positional signals from the device 133B to determine an actual position of the extension arm 123 relative to the end tower structure 112.

In an implementation, the control device 130 is mounted to the central pivot structure 102 (i.e., control panel 131), or a control cart. In another example implementation, the control device 130 is located at the end tower structure 112. The control device 130 is generally located on the structural element of the irrigation system 100 where the applicant/water is introduced into the irrigation system; however, other configurations known in the art are within the scope of the present disclosure.

The control device 130 is configured to monitor operating conditions and configured to control various functions of the irrigation system 100. In certain implementations, the control device 130 actively monitors the irrigation system's 100 function and performance including, but not limited to: a position of one or more conduit sections 120, 121, 122 or tower structures 110, **I11,** 112 (e.g., the position of the main section assembly 104), whether the irrigation system 100 is powered on or off, a voltage parameter associated with the irrigation system 100, a motor speed parameter associated with the irrigation system 100, an approximate ground speed parameter associated with the irrigation system 100, a direction parameter associated with theirrigation system 100, a diagnostic parameter associated with the irrigation system 100, whether the applicant is being supplied to the irrigation system 100 (e.g., whether the fluid displacement device is operational), whether the Stop in Slot (SIS) is powered on or off, an applicant pressure associated with the irrigation system 100, a time parameter, a date parameter, a field position parameter of the irrigation system components, end-gun status, and whether the programs (e.g., software programs, etc.) are running properly. The control device 130 also controls the irrigation system's 100 functions and settings including, but not limited to: start and stop, selectively powering the main fluid displacement device, an applicant application depth parameter, the direction of travel associated with the irrigation system 100, selectively powering the SIS, automatically reversing or stopping the irrigation system 100, automatically restarting the irrigation system 100, providing an operator auxiliary control to the system 100, writing and editing irrigation programs (e.g., irrigation software programs), and controlling sector and sequential programs (e.g., software programs). In another implementation, the control device 130 may cause an alert to be issued to the operator ifthere are any errors in the operation of the irrigation system 100 or if any of the functions or conditions monitored by the control device 130 have been compromised (e.g., ceased operation or are outside an acceptable range).

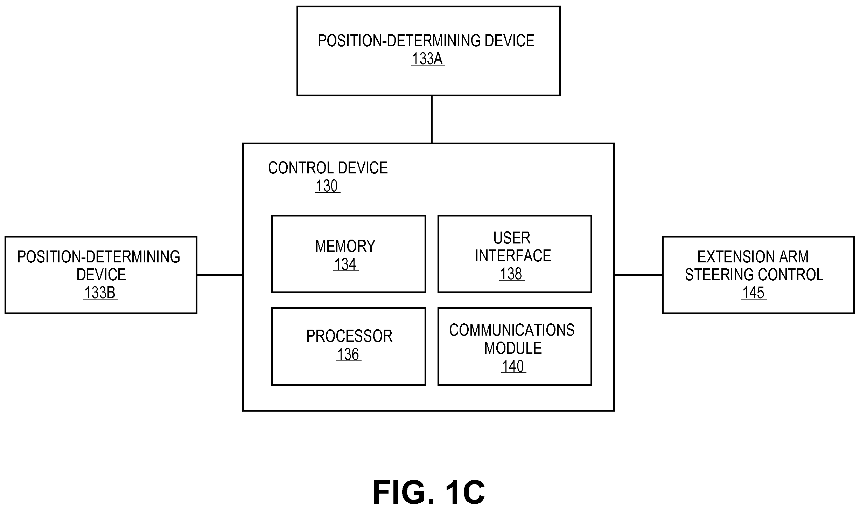

The control device 130, as shown in FIG. 1C, includes at least a memory 134 to store one or more software programs (e.g., software modules), a processor 136 communicatively coupled to the memory 134, a user interface 138 (e.g., graphical user interface, etc.), and a communications module 140 (e.g., transmitter, receiver, transceiver, etc.). The memory 134 is an example of tangible computer-readable media that provides storage functionality to store various data associated with the operation of the control device 130, such as software programs/modules and code segments mentioned herein, or other data to instruct the processor 136 to perform, or execute, the steps described herein. In one or more implementations, the memory 134 is configured to store data representative of a plurality of positions of the main section assembly 104 along an irrigation path (e.g., a generally circular or generally semi-circular path of travel) and data that is representative of desired positions of an extension arm assembly.

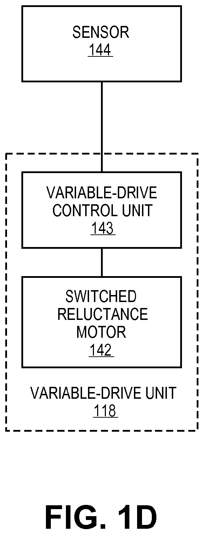

As described above, the irrigation system may include a plurality of drive units 118 mounted to each tower structure 110, 111, 112. As shown in FIG. 1D, each drive unit 118 may comprise a switched reluctance motor (SRM) 142. The switched reluctance motor 142 is an electric motor configured to operate utilizing reluctance torque. The use of switched reluctance motors 142 allows for continuous speed adjustment (as compared to motors not utilizing switched reluctance configurations), which allows for dynamic ("on-the-fly") alignment adjustments of the spans 106, 108, 109. Additionally, the switched reluctance motors 142 allow for the constant movement of the center pivot irrigation systems (as compared to center pivot irrigation systems not having switched reluctance motors), which may allow for greater uniform application of water and/or chemicals while lessening waste.

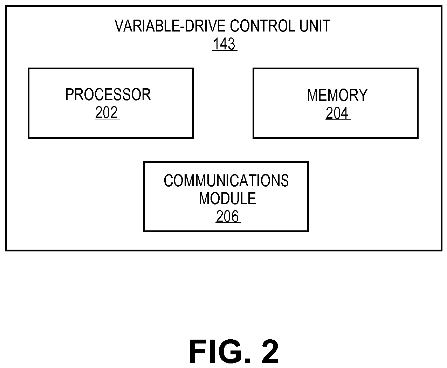

As shown in FIG. 1D, the variable-drive units 118 may each include a variable-drive control unit 143. As shown in FIG. 2, the variable-drive control unit 143 includes a processor 202 that is configured to provide processing functionality to the variable-drive control unit 143. Thus, the processor 202 may execute one or more software programs and/or instructions described herein. The variable-drive control unit 143 also includes a memory 204, which is an example of tangible computer-readable media that provides storage functionality to store various data associated with the operation of the variable-drive control unit 143, such as software programs/modules and code segments mentioned herein, or other data to instruct the processor 202 to perform the steps described herein. In an implementation, the variable-drive control unit 143 is directly connected with the respective sensor 144 (e.g., via a wired connection). In this implementation, the variable control unit 143 is also directly connected to the respective switched reluctance motor
142 (e.g., via a wired connection). In another implementation, the variable-drive control unit 143 may include a communication module 206, which is configured to communicate with other components (e.g., switched reluctance motors 142, sensors 144) over a communication network (e.g., a wireless network, a wired network, etc.). For example, the communication module 206 may be directed coupled (e.g., via one or more wires, or the like) to a corresponding variable- drive unit 118, as well as a corresponding sensor 144. The communication module 206 may be representative of a variety of communication components and functionality, including, but not limited to: one or more antennas, a transmitter and/or receiver, a transceiver, or the like. While FIG. 2 illustrates that the variable-drive control unit 143 is integrated (e.g., housed within) with the variable-drive unit 118, it is understood that the variable-drive control unit 143 may be a standalone unit.

As shown in FIG. 1D, each of the sensors 144 is in communication with the respective variable-drive control unit 143. In a specific implementation, the sensors are in direct electronic communication with the corresponding variable-drive control unit 143. Previously, irrigation systems may have employed rod-and-switch actuators. These actuators may be replaced with the sensors 144 configured to monitor (e.g., determine) the span-to-span alignment of the irrigation system 100. For example, the sensors 144 are configured to determine an angle between the corresponding spans. In one or more implementations, the sensors 144 may be potentiometers, captive alignment sensors, laser based alignment sensors, non-contact proximity sensors, or other devices capable of quantifiably measunng the span alignment (e.g., determining an angle value between the corresponding spans) rather than merely determining if the respective span 106, 108, 109 is out of alignment beyond a preset maximum value. As described above, the sensors 144 (potentiometers, the captive alignment sensors, the laser based alignment sensors, and/or the non-contact proximity sensors) are in electronic communication with the variable-drive control unit 143. In response, the variable-drive control unit 143 is configured to furnish (e.g., provide, generate, transmit) one or more drive unit signals to control the switched reluctance motor 142. For example, the processor 202 of the variable-drive control unit 143 is configured to translate the angle information furnished by the sensor 144 into speed information that is utilized to control the switched reluctance motor 142 (e.g., control the speed of the corresponding span 106, 108, 109). Thus, the variable-drive control unit 143 may furnish one or more drive unit signals that are configured to cause a specified drive unit 118 to modify the speed (e.g., increase the speed, decrease the speed) of the unit 118 (e.g., switched reluctance motor 142), which causes the corresponding span 106, 108, 109 to vary in speed. The control device 130 is configured to communicate with each variable-drive control unit during operation of the irrigation system 100. For example, the variable-drive control unit 143 may be configured to furnish diagnostic and/or performance information regarding the variable-drive unit 118 to the control device 130.

In an implementation, a sensor 144 is configured to continually monitor (determine) the alignment values (e.g., angles) of the corresponding spans 106, 108, 109. In turn, the variable-drive control unit 143 is configured to furnish a drive unit signal configured to cause the corresponding drive unit 118 to continuously modify the speed of the drive unit 118 (e.g., modify the speed of the switched reluctance motor 142) to re-align the corresponding mis-aligned span 106, 108, 109. Thus, the variable-drive control unit 143 is configured to continuously provide signals, based upon the sensor 144 signal, to cause at least substantially near-perfect (e.g., near-horizontal alignment) between the corresponding spans by way of the switched-reluctance motors 142. For example, the speed of the drive unit 118 may be varied (via one or more drive unit signals) based upon a deviation from a zero degree (0° span to span alignment). In one or more implementations, the irrigation system 100 (e.g., sensors 144, variable-drive control unit 143, etc.) may utilize one or more motor control techniques to adjust the speed of the drive units 118 and/or measure the alignment of a particular span. For example, the irrigation system 100 may utilize a proportional-integral-derivative control algorithm, or the like, to fine tune the speed of a particular drive unit 118. The variable-drive control unit 143 is configured to continuously furnish one or more drive unit signals to the drive units 118 when the sensor 144 determines that a particular span is mis aligned.

Thus, in operation, drive unit (control) signals configured to adjust the set speed of a particular drive unit 118 are furnished to the particular drive unit 118, which causes a drive unit speed adjustment. As described above, the drive unit signals may be based on potentiometer signals, captive alignment sensor signals, laser based alignment sensor signals, non-contact proximity sensor signals, and/or other parameters useful in determining a new set speed for a particular drive unit. As described above, the variable-drive control unit 143 includes a processor 202 that is configured to receive and to utilize data (information) from the tower structures 110, 111, 112 in determining the set speed for a particular drive unit 118. In an implementation, the processor 202 may comprise a microcontroller that includes dedicated logic (e.g., circuitry) for controlling the variable-drive units 118 and/or the switched reluctance motors 142. For example, the variable-drive control unit 143 may be in communication with each ofthe tower structures 110, 111, 112 by way of sensors 144, or the like. As described above, this may allow for finer speed control and dynamic alignment correction of the irrigation system 100.

As shown in FIG. 1C, the irrigation system 100 includes an extension arm steering assembly includes the extension arm steering control 145 that is configured to steer the extension arm 123 to a desired position. According to the invention, the processor 136 is configured to instruct the extension arm steering control 145 to steer the extension arm 123 to a desired position.

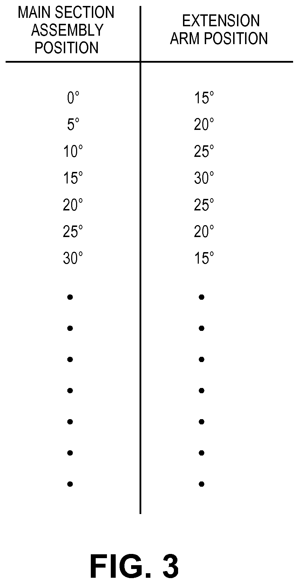

As described above, the irrigation system 100 is configured to maintain the spans 110, 111, 112 in a substantially linear orientation with respect to an adjacent span along a generally longitudinally oriented axis. During operation, the position-determining device 133A is utilized to determine an actual position of the main section assembly 104, and the position-determining device 133B is utilized to determine an actual position of the extension arm 123. For example, based upon the angle value (a) (e.g., angular measurement) detected by an angle sensor 133A, the control device 130 is configured to determine a position of the main section assembly 104. An angle sensor 133B is configured to measure an angle value (8) (e.g., angular measurement) between the end tower 112 and the extension arm 123. Thus, the control device 130 may be configured to determine an actual position of the extension tower 123 based upon the angular measurement furnished by the angle sensor 133B. The control device 130 is configured to determine a desired position of the extension arm 123 based upon the determined position of the main section assembly 104. For example, the control device 130 may utilize a look-up table, as shown in FIG. 3, that contains a list of desired positions of the extension arm 123 that correspond to an actual position of the main section assembly 104. In an implementation, a processor 136 is configured to access the look-up table that is stored within a respective memory 134. The look- up table includes a number of positions of the main section assembly's irrigation path 146 (see FIG. IB). The look-up table also includes a desired position of the extension arm 123 for each of the main section assembly's position. For example, the positions of the extension arm 123 are represented by an angle (8) formed between the extension arm 123 and the main section assembly 104 as shown in FIG. lB. The main section assembly 104 and the extension arm 123 may be represented in the look-up table in any suitable format. For example, the positions may be represented as geographic coordinates, distances from other objects, angles from other objects, or the like. Once a processor 136, determines an actual position of the main section assembly 104, the processor 136, is configured to calculate whether an actual position of the extension arm 123 deviates from the desired position. If the extension arm 123 deviates beyond a predetermined threshold, the processor 136 is configured to instruct the steering mechanism 145 to re-position the extension arm 123 to the desired position.

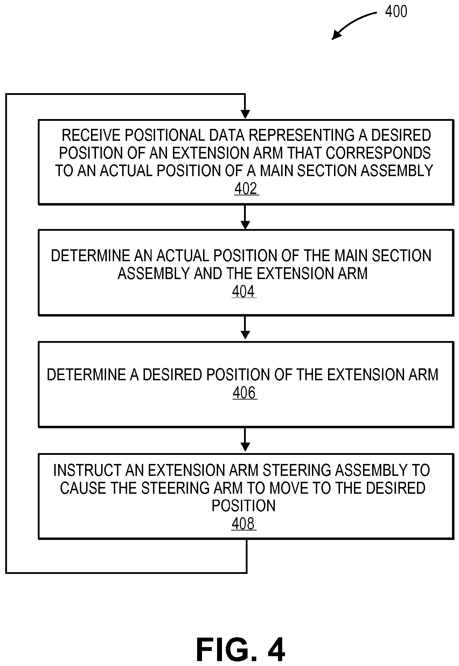

FIG. 4 illustrates an example method 400 for re-positioning an extension arm 123 based upon a position of the main section assembly 104. As shown in FIG. 4, positional data representing a desired position of an extension arm that corresponds to a position of a main section assembly is received (Block 402). For example, as described above, the look-up table includes a list of desired positions of the extension arm 123 that correspond to a position of the main section assembly 104.

The actual position of the extension arm and the main section assembly is determined (Block 404). As described above, a position of the main section assembly 104 is determined utilizing a position-determining device 133A that provides positional data representing a position of the main irrigation assembly 104 to the control device 130. Similarly, the position- determining device 133B is configured to furnish positional data representing a position of the extension arm 123 to the control device 130. Once the positions are determined, a desired position of an extension arm is determined (Block 406). In an implementation, the control device 130 configured to utilize the look-up table to determine a desired position of the extension arm 123 based upon the current position of the main section assembly 104.

Based upon the desired position, an extension arm steering assembly is instructed to cause the steering arm to move to the desired position (Block 408). According to the invention, the control device 130 is configured to, via the processor 136, instruct the extension arm steering control 145 to steer in or steer out, or move the extension arm 123 to the desired position based upon the position of the main section assembly 104. For example, the processor 136 is configured to compare an actual position of the extension arm 123 to the desired position of the extension arm 123. If the actual position deviates from the desired position greater than a predetermined threshold, a processor 136 is configured to calculate a steering correction value and then instructs the extension arm to steer toward the desired position. The method 500 can return to Block 508 to determine the actual positions of the main section assembly 104 and the extension arm 123 and make any steering adjustments as required.

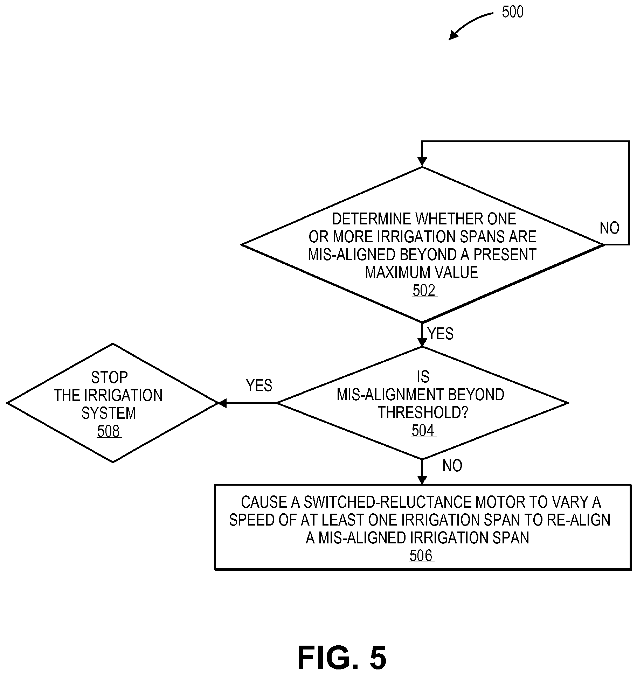

FIG. 5 illustrates an example method 500 for determining mis-alignment of an irrigation system. As shown in FIG. 5, a determination is made of whether one or more irrigation spans are mis-aligned beyond a preset maximum value (Decision Block 502). In one or more implementations, as described above, the sensors 144 are configured to determine whether one or more of the spans 106, 108, 109 are mis-aligned beyond a preset maximum value. If an irrigation span is mis-aligned beyond a preset maximum value (NO from Decision Block 502), a variable-drive control unit is configured to cause a switched reluctance motor to vary a speed of at least one irrigation span to re-align a mis-aligned irrigation span (Block 506). If the system cannot maintain the desired alignment (YES from Decision Block 502), the irrigation system is stopped or shut down (Block 508) to prevent further misalignment and to prevent improper steering of the extension arm 123.

## Claims

1. An irrigation system having a centre pivot structure (102) and a main section assembly (104) coupled to the centre pivot structure (102) and further comprising:
the main section assembly (104) including a plurality of interconnected spans (106, 108, 109),
a plurality of tower structures (110,111,112) for supporting the interconnected spans, each one of the plurality of tower structures including a variable-speed drive unit (118) for selectively driving a tower structure at a selected speed, a plurality of sensors (144), each one of the plurality of sensors associated with a corresponding one of the plurality of interconnected spans and configured to determine an alignment of a corresponding one of the plurality of interconnected spans,
a plurality of variable-drive control units (143), each variable-drive control unit of the plurality of drive control units in communication with a corresponding variable-speed drive unit and a corresponding sensor (144), each variable-drive control unit configured to control the selected speed of the corresponding variable-speed drive unit to maintain the plurality of interconnected spans in a substantially linear orientation with respect to adjacent ones of the plurality of interconnected spans along a generally longitudinally oriented axis,
a control device (130) configured to communicate with each variable drive control unit, the variable drive control units being configured to, when a misalignment is determined by a sensor (144), furnish a drive unit signal configured to cause the corresponding drive unit (118) to continuously modify the speed of the drive unit (118) to re-align a corresponding one of the plurality of interconnected spans (106, 108, 109) of the main section assembly; the plurality of tower structures including an end tower (112);
an extension arm (123) coupled to the end tower (112) by an articulating pivot joint to allow the extension arm (123) to articulate or bend relative to the end tower (112),
the extension arm supported by a swing tower (128) having steerable wheels (129) driven by a motor controllable by means of an extension arm steering control (145) to steer in or steer out, or move the extension arm (123);
a first position-determining component (133A) configured to determine a current position of the main section assembly;
a second position-determining component (133B) configured to determine a current position of the extension arm (123);
and
the control device (130) including a memory (134), a processor (136), a user interface (138) and a communications module (140) communicatively coupled to the first position-determining component (133A) and the second position-determining component (133B), **characterised in that** the control device is further configured to:
determine a desired position of the extension arm (123) based upon the actual position of the main section assembly (104);
compare the desired position of the extension arm (123) relative to the end tower (112) to the actual position of the extension arm (123) relative to an end tower (112);
and
via the processor, instruct the extension arm steering control (145) to steer in or steer out, or move the extension arm (123) to the desired position, the desired position being based upon the position of the main section assembly (104) when the desired position of the extension arm (123) and the actual position of the extension arm deviate by greater than a predetermined threshold,
and wherein the desired position corresponds to a position of the main section assembly's irrigation path (146) wherein the extension arm (123) is folded in relative to the end tower (112) when the extension arm (123) is not irrigating a corner of the field and is pivoted outwardly away from the end tower (112) while irrigating the corners of a field.

2. The irrigation system as recited in claim 1, wherein at least one sensor (144) is configured to determine an angle α between a first corresponding interconnected span of the plurality of interconnected spans and a second corresponding interconnected span of the plurality of interconnected spans; wherein the corresponding variable-drive control unit (143) is configured to determine a selected speed to maintain the plurality of interconnected spans in a substantially linear orientation with respect to adjacent ones of the plurality of interconnected spans along a generally longitudinally oriented axis, the selected speed based upon the angle α.

3. The irrigation system as recited in claim 1, wherein each sensor of the plurality of sensors (133) is in direct communication with a corresponding variable-drive control unit (143) of the plurality of variable-drive control units.

4. The irrigation system as recited in claim 1, wherein the variable-speed drive units (143) comprise switched reluctance motors (142).

5. The irrigation system as recited in claim 1, wherein the plurality of sensors (144) comprise at least one of a potentiometer, a captive alignment sensor, a laser based alignment sensor, or a noncontact proximity sensor.

## Patentansprüche

1. Bewässerungssystem mit einer zentralen Drehachsenstruktur (102) und einer Hauptabschnitt-Baugruppe (104), die mit der zentralen Drehachsenstruktur (102) gekoppelt ist, und ferner umfassend:
Die Hauptabschnitt-Baugruppe (104), die eine Vielzahl von miteinander verbundenen Bereichen (106, 108, 109) einschließt,
eine Vielzahl von Maststrukturen (110, 111, 112) zum Abstützen der miteinander verbundenen Bereiche, wobei jede der Vielzahl von Maststrukturen eine Antriebseinheit mit variabler Geschwindigkeit (118) einschließt, um eine Maststruktur selektiv mit einer ausgewählten Geschwindigkeit anzutreiben, eine Vielzahl von Sensoren (144), wobei jeder der Vielzahl von Sensoren mit einem entsprechenden der Vielzahl von miteinander verbundenen Bereichen verbunden und konfiguriert ist, eine Ausrichtung eines entsprechenden der Vielzahl von miteinander verbundenen Bereichen zu bestimmen,
eine Vielzahl von variablen Antriebssteuereinheiten (143), wobei jede variable Antriebssteuereinheit der Vielzahl von Antriebssteuereinheiten in Verbindung mit einer entsprechenden Antriebseinheit mit variabler Geschwindigkeit und einem entsprechenden Sensor (144) steht, jede variable Antriebssteuereinheit ist so konfiguriert, dass sie die ausgewählte Geschwindigkeit der entsprechenden Antriebseinheit mit variabler Geschwindigkeit steuert, um die Vielzahl von miteinander verbundenen Bereichen in einer im Wesentlichen linearen Ausrichtung im Verhältnis zu benachbarten der Vielzahl von miteinander verbundenen Bereichen entlang einer im Allgemeinen längs ausgerichteten Achse zu halten,
ein Steuergerät (130), konfiguriert, um mit jeder variablen Antriebssteuereinheit zu kommunizieren, wobei die variablen Antriebssteuereinheiten so konfiguriert sind, dass sie, wenn eine Fehlausrichtung durch einen Sensor (144) festgestellt wird, ein Antriebseinheitsignal ausgeben, das konfiguriert ist, die entsprechende Antriebseinheit (118) zu veranlassen, die Geschwindigkeit der Antriebseinheit (118) fortlaufend zu verändern, um einen entsprechenden der Vielzahl von miteinander verbundenen Bereichen (106, 108, 109) der Hauptabschnitt-Baugruppe neu auszurichten; die Vielzahl der Maststrukturen schließt einen Endmast (112) ein;
einen Auslegerarm (123), der mit dem Endmast (112) über ein bewegliches Drehgelenk gekoppelt ist, um es dem Auslegerarm (123) zu erlauben, sich im Verhältnis zum Endmast (112) zu bewegen oder zu biegen,
der Auslegerarm liegt auf einem Schwingmast (128) mit steuerbaren Rädern (129), die von einem Motor angetrieben werden, der über eine Auslegerarm-Lenkwelle (145) steuerbar ist, um den Auslegerarm (123) nach innen oder außen zu steuern oder zu bewegen;
eine erste Positionsbestimmungskomponente (133A), die konfiguriert ist, eine aktuelle Position der Hauptabschnitt-Baugruppe zu bestimmen;
eine zweite Positionsbestimmungskomponente (133B), die konfiguriert ist, eine aktuelle Position des Auslegerarms (123) zu bestimmen;
und
das Steuergerät (130), das einen Speicher (134), einen Prozessor (136), eine Benutzerschnittstelle (138) und ein Kommunikationsmodul (140) einschließt, das kommunikativ mit der ersten Positionsbestimmungskomponente (133A) und der zweiten Positionsbestimmungskomponente (133B) gekoppelt ist, **dadurch gekennzeichnet, dass** das Steuergerät ferner für Folgendes konfiguriert ist:
Bestimmen einer gewünschten Position des Auslegerarms (123), basierend auf der aktuellen Position der Hauptabschnitt-Baugruppe (104);
Vergleichen der gewünschten Position des Auslegerarms (123) im Verhältnis zu dem Endmast (112) mit der aktuellen Position des Auslegerarms (123) im Verhältnis zu einem Endmast (112);
und
über den Prozessor, Anweisen der Auslegerarm-Lenkwelle (145), den Auslegerarm (123) in die gewünschte Position hinein oder heraus zu steuern oder zu bewegen, wobei die gewünschte Position auf der Position der Hauptabschnitt-Baugruppe (104) basiert, wenn die gewünschte Position des Auslegerarms (123) und die aktuelle Position des Auslegerarms um mehr als einen vorbestimmten Schwellenwert voneinander abweichen,
und wobei die gewünschte Position einer Position des Bewässerungspfads der Hauptabschnitt-Baugruppe (146) entspricht, wobei der Auslegerarm (123) im Verhältnis zu dem Endmast (112) eingeklappt wird, wenn der Auslegerarm (123) keine Ecke des Felds bewässert und nach außen von dem Endmast (112) weggedreht wird, wenn die Ecken eines Felds bewässert werden.

2. Bewässerungssystem nach Anspruch 1, wobei mindestens ein Sensor (144) konfiguriert ist, einen Winkel α zwischen einem ersten entsprechenden miteinander verbundenen Bereich der Vielzahl von miteinander verbundenen Bereiche zu bestimmen und einen zweiten entsprechenden miteinander verbundenen Bereich der Vielzahl von miteinander verbundenen Bereiche zu bestimmen; wobei die entsprechende variable Antriebssteuereinheit (143) konfiguriert ist, eine ausgewählte Geschwindigkeit zu bestimmen, um die Vielzahl der miteinander verbundenen Bereiche in einer im Wesentlichen linearen Ausrichtung im Verhältnis zu benachbarten der Vielzahl von miteinander verbundenen Bereiche entlang einer im Allgemeinen längs ausgerichteten Achse zu halten, die ausgewählte Geschwindigkeit basiert dabei auf dem Winkel α.

3. Bewässerungssystem nach Anspruch 1, wobei jeder Sensor der Vielzahl von Sensoren (133) in direkter Verbindung mit einer entsprechenden variablen Antriebssteuereinheit (143) der Vielzahl von variablen Antriebssteuereinheiten steht.

4. Bewässerungssystem nach Anspruch 1, wobei die Antriebseinheiten (143) mit variabler Geschwindigkeit geschaltete Reluktanzmotoren (142) umfassen.

5. Bewässerungssystem nach Anspruch 1, wobei die Vielzahl von Sensoren (144) mindestens eines aus einem Potentiometer, einem unverlierbaren Ausrichtungssensor, einem laserbasierten Ausrichtungssensor oder einem berührungslosen Näherungssensor umfasst.

## Revendications

1. Système d'irrigation présentant une structure de pivot central (102) et un ensemble de la section principale (104) accouplé à la structure de pivot central (102) et comprenant en outre :
l'ensemble de la section principale (104) comportant une pluralité de portées interconnectées (106, 108, 109),
une pluralité de structures de tour (110, 111, 112) destinées à supporter les portées interconnectées, chaque structure parmi la pluralité de structures de tour comportant une unité d'entraînement à vitesse variable (118) destinée à entraîner de manière sélective une structure de tour à une vitesse sélectionnée, une pluralité de capteurs (144), chaque capteur parmi la pluralité de capteurs étant associé à une portée correspondante de la pluralité de portées interconnectées et conçu pour déterminer un alignement d'une portée correspondante de la pluralité de portées interconnectées,
une pluralité d'unités de commande d'entraînement variable (143), chaque unité de commande d'entraînement parmi la pluralité d'unités de commande d'entraînement étant en communication avec une unité d'entraînement à vitesse variable correspondante et un capteur correspondant (144), chaque unité de commande d'entraînement variable étant conçue pour commander la vitesse sélectionnée de l'unité d'entraînement à vitesse variable correspondante afin de maintenir la pluralité de portées interconnectées dans une orientation sensiblement linéaire par rapport aux portées adjacentes de la pluralité de portées interconnectées le long d'un axe orienté généralement de manière longitudinale,
un dispositif de commande (130) conçu pour communiquer avec chaque unité de commande d'entraînement à vitesse variable, les unités de commande d'entraînement à vitesse variable étant conçues pour, lorsqu'un défaut d'alignement est déterminé par un capteur (144), fournir un signal d'unité d'entraînement conçu pour amener l'unité d'entraînement correspondante (118) à modifier en continu la vitesse de l'unité d'entraînement (118) afin de réaligner une portée correspondante parmi la pluralité de portées interconnectées (106, 108, 109) de l'ensemble de la section principale ; la pluralité de structures de tour comportant une tour d'extrémité (112) ;
un bras d'extension (123) accouplé à la tour d'extrémité (112) par un joint à pivot articulé pour permettre au bras d'extension (123) de s'articuler ou de se plier par rapport à la tour d'extrémité (112),
le bras d'extension est supporté par une tour oscillante (128) présentant des roues directrices (129) entraînées par un moteur pouvant être commandé au moyen d'une commande de direction du bras d'extension (145) pour manoeuvrer vers l'intérieur ou vers l'extérieur, ou déplacer le bras d'extension (123) ;
un premier composant de détermination de la position (133A) conçu pour déterminer une position actuelle de l'ensemble de la section principale ;
un second composant de détermination de la position (133B) conçu pour déterminer une position actuelle du bras d'extension (123) ;
et
le dispositif de commande (130) comportant une mémoire (134), un processeur (136), une interface utilisateur (138) et un module de communication (140) couplés de manière à communiquer avec le premier composant de détermination de la position (133A) et avec le second composant de détermination de la position (133B), **caractérisé en ce que** le dispositif de commande est conçu en outre pour :
déterminer une position souhaitée du bras d'extension (123) en fonction de la position réelle de l'ensemble de la section principale (104) ;
comparer la position souhaitée du bras d'extension (123) par rapport à la tour d'extrémité (112) à la position réelle du bras d'extension (123) par rapport à une tour d'extrémité (112) ;
et
par l'intermédiaire du processeur, ordonner à la commande de direction du bras d'extension (145) de manoeuvrer vers l'intérieur ou vers l'extérieur, ou de déplacer le bras d'extension (123) vers la position souhaitée, la position souhaitée étant en fonction de la position de l'ensemble de la section principale (104) lorsque la position souhaitée du bras d'extension (123) et la position réelle du bras d'extension s'écartent d'un seuil prédéfini,
et dans lequel la position souhaitée correspond à une position du trajet d'irrigation (146) de l'ensemble de la section principale dans lequel le bras d'extension (123) est replié par rapport à la tour d'extrémité (112) lorsque le bras d'extension (123) n'irrigue pas un coin du champ et est pivoté vers l'extérieur partant de la tour d'extrémité (112) tout en irriguant les coins d'un champ.

2. Système d'irrigation tel que décrit dans la revendication 1, dans lequel au moins un capteur (144) est conçu pour déterminer un angle α entre une première portée interconnectée correspondante de la pluralité de portées interconnectées et une seconde portée interconnectée correspondante de la pluralité de portées interconnectées ; dans lequel l'unité de commande d'entraînement correspondante (143) est conçue pour déterminer une vitesse sélectionnée pour maintenir la pluralité de portées interconnectées dans une orientation sensiblement linéaire par rapport à des portées adjacentes de la pluralité de portées interconnectées le long d'un axe orienté généralement de manière longitudinale, la vitesse sélectionnée étant fonction de l'angle α.

3. Système d'irrigation tel que décrit dans la revendication 1, dans lequel chaque capteur de la pluralité de capteurs (133) est en communication directe avec une unité de commande d'entraînement variable correspondante (143) de la pluralité d'unités de commande d'entraînement variable.

4. Système d'irrigation tel que décrit dans la revendication 1, dans lequel les unités d'entraînement à vitesse variable (143) comprennent des moteurs à réluctance commutés (142).

5. Système d'irrigation tel que décrit dans la revendication 1, dans lequel la pluralité de capteurs (144) comprend un potentiomètre, et/ou un capteur d'alignement captif, et/ou capteur d'alignement à laser ou un capteur de proximité sans contact.
